# EUROPÄISCHE PATENTSCHRIFT

(11) **EP 1 179 484 B1**
(45) Veröffentlichungstag und Bekanntmachung des Hinweises auf die Patenterteilung: **24.05.2006**
(21) Anmeldenummer: 01117206.1
(22) Anmeldetag: 14.07.2001
(51) Int. Cl.: B65D 6/00, B65D 8/00, B29C 65/00

(54) **Verfahren zur Herstellung einer hülsenartigen Kunststoffverpackung mit eingesetztem Boden**
Manufacturing process for a tubular plastic container with inserted bottom
Procédé de fabrication d'un récipient tubulaire en matière plastique avec fond rapporté

(30) Priorität: 09.08.2000 DE 10039605
(43) Veröffentlichungstag der Anmeldung: 13.02.2002
(73) Patentinhaber: Linhardt Metallwarenfabrik GmbH & Co. KG, 94234 Viechtach (DE)
(72) Erfinder: Beil, Johann, 93462 Lam (DE)
(74) Vertreter: Graf, Helmut

(56) Entgegenhaltungen:
- WO-A-98/09796
- GB-A- 2 156 268
- US-A- 4 261 502
- US-A- 4 497 407

## Beschreibung

Die Erfindung bezieht sich auf ein Verfahren zum Herstellen einer Verpackung, nämlich einer Kunststoffverpackung gemäß dem Oberbegriff des Patentanspruchs 1.

Kunststoffverpackungen, insbesondere auch für die Verwendung im Arzneimittelbereich, sind bekannt. Diese Verpackungen bestehen grundsätzlich aus einem hülsenartigen Verpackungskörper, der an einem Ende durch einen Boden und am anderen Ende durch ein abnehmbares Verschlußelement verschlossen ist. Die bekannten Verpackungen werden in der Regel als Kunststoffspritzteil hergestellt, und zwar derart, daß der jeweilige Boden einstückig mit dem Verpackungskörper gefertigt ist.

Bekannt ist ein Verfahren zum Herstellen von Verpackungen mit einem zylinderförmigen Körper (WO 98 09 796 A), bei dem (Verfahren) ein rohrförmiges Ausgangsmaterial aus Kunststoff durch Extrudieren hergestellt wird. Von diesem rohrförmigen Ausgangsmaterial werden dann Längen entsprechend dem jeweiligen Behälterkörper abgetrennt und an einem Ende mit einem Boden versehen.

Bekannt ist es weiterhin (GB-A- 2 156 268), Verpackungsbehälter aus einem mehrlagigen Laminat durch Wickeln auf einen Formkörper und durch Verbinden der Wickelenden, beispielsweise durch Verschweißen herzustellen. Nachteilig hierbei ist, dass die derartig hergestellten Verpackungskörper an ihrer Umfangswand eine entlang einer Mantellinie verlaufende Naht aufweisen, die nicht nur optisch sichtbar ist, sondern auch eine Reduzierung der Sperrwirkung der Umfangswand des Verpackungskörpers zur Folge haben kann.

Bekannt ist weiterhin auch (GBA-2 156 268), flaschen- oder dosenartige Behälter mit seinem rohrfömigen Behälterkörper herzustellen, der eine mehrlagige, thermoplastische Wandstruktur aufweist und durch Koextrusion hergestellt ist.

Aufgabe der Erfindung ist es, ein Verfahren aufzuzeigen, mit dem in vereinfachter Weise eine Kunststoffverpackung mit hoher Sperrwirkung hergestellt werden kann. Zur Lösung dieser Aufgabe ist ein Verfahren entsprechend dem Patentanspruch 1 ausgebildet.

Die erfindungsgemäße Verpackung zeichnet sich durch einen modularen Aufbau aus, der es unter anderem ermöglicht, ohne Änderung oder aber zumindest ohne größere Änderung auf einer vorhandenen Fertigungslinie Verpackungen unterschiedlicher Größe bzw. Länge zu fertigen und an die jeweiligen Erfordernisse optimal anzupassen.

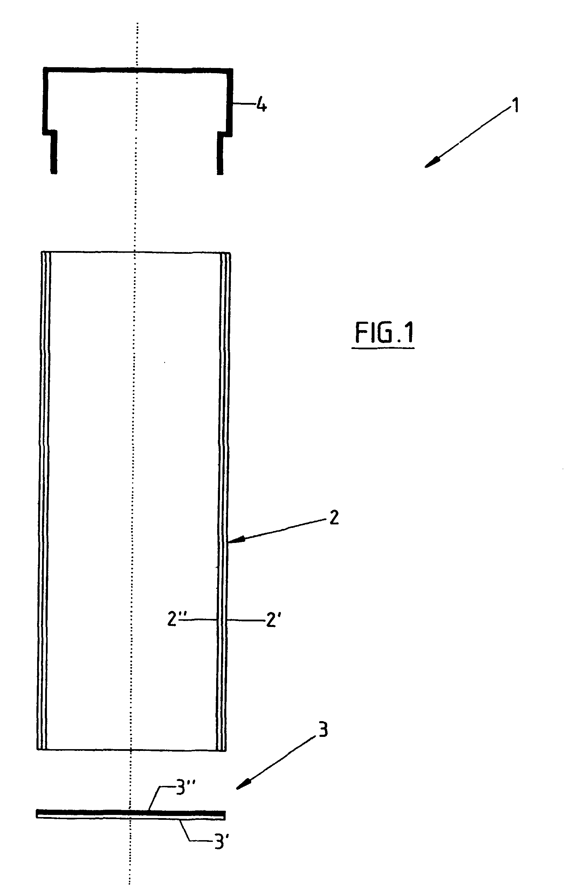

Weiterbildungen der Erfindung sind Gegenstand der Unteransprüche. Die Erfindung wird im folgenden anhand der Figur 1 näher erläutert.

Die in der Figur 1 dargestellte Verpackung 1 besteht im wesentlichen aus einem hohlzylinderartigen Hülsen- oder Verpackungskörper 2 mit kreiszylinderförmiger Innen- und Außenfläche, aus einem Boden 3, der in das eine, in der Figur 1 untere Ende des Verpackungskörpers 2 passend eingesetzt und dort in geeigneter Weise mit der Wandung des Verpackungskörpers 2 fest verbunden ist, und zwar z.B. durch Schweißen, beispielsweise durch Warmschweißen, Reibschweißen, Ultraschallschweißen oder durch Kleben.

Weiterhin weist die Verpackung 1 ein mehrfunktionales Verschlußelement 4 auf, welches als Kunststoffspritzteil hergestellt ist, z.B. in Form eines Stopfens, eines Clips, mit oder ohne Originalitätssicherung, mit/ohne Kindersicherung, als Portionierer usw.

Eine Besonderheit der Verpackung 1 besteht darin, daß der Hülsenkörper 2 durch Zuschneiden eines rohrartigen Rohlings auf die jeweilige Länge des Hülsenkörpers 2 hergestellt ist, und zwar beispielsweise durch mechanisches Schneiden, Schneiden mit einer Lasereinrichtung usw.

Das für die Herstellung des Verpackungskörpers 2 verwendete rohrförmige Ausgangsmaterial wird durch Extrudieren und dabei speziell durch Koextrudieren mehrschichtig hergestellt. Bei der dargestellten Ausführungsform besteht dieses Material aus zwei aneinander anschließenden und flächig miteinander verbundenen Schichten, nämlich aus der äußeren Schicht 2' und der inneren Schicht 2". Auch der Boden 3 ist mehrschichtig ausgeführt, und zwar bestehend aus der äußeren Schicht 3' und der inneren Schicht 3".

Der beschriebene modulare Aufbau der Verpackung 1 hat eine Vielzahl von Vorteilen. So ist es beispielsweise möglich, das Ausgangsmaterial für den jeweiligen Verpackungskörper 2 durch Extrudieren preiswert zu fertigen. Gleiches gilt für den Boden 3 bzw. dessen Ausgangsmaterial, welches als Flachmaterial gefertigt wird, aus dem dann der jeweilige Boden 3 durch Ausstanzen oder Ausschneiden gewonnen wird. Das Ausstanzen der Böden 3 kann dabei dann in einer Vorrichtung unmittelbar vor dem Einsetzen des jeweiligen Bodens 3 in einen Verpackungskörper 2 erfolgen, d.h. mit dem Werkzeug oder Stempel, mit dem das Ausstanzen des Bodens 3 aus dem entsprechenden Ausgangsmaterial (Flachmaterial) erfolgt, wird dieser Boden auch in den Verpackungskörper 2 eingesetzt, wo dieser Boden dann mit der Wandung des Verpackungskörpers 2 verbunden wird.

Durch Abtrennen unterschiedlicher Längen von dem rohrförmigen Ausgangsmaterial kann die Länge der Verpackungskörper 2 und damit die Größe der Verpackung variiert werden, ohne daß eine grundsätzliche Umrüstung der Fertigungslinie erforderlich ist. Weiterhin läßt sich durch einen einfachen Werkzeugwechsel auch der Durchmesser der Verpackung 1 variieren.

Die mehrschichtige Ausbildung des für den Verpackungskörper 2 verwendeten rohrartigen Ausgangsmaterials sowie die mehrschichtige Ausbildung des für den Boden 3 verwendeten flachen Ausgangsmaterials hat den Vorteil, daß die Eigenschaften des Verpackungskörpers 2 sowie des jeweiligen Bodens 3 durch entsprechende Materialauswahl und/oder durch entsprechende Wahl der Schichtdicken und damit die Eigenschaften der Verpackung 1 eingestellt werden können, insbesondere auch optimal angepaßt an die jeweilige Verwendung. Es hat sich gezeigt, daß durch den mehrschichtigen Aufbau eine höhere Sperrwirkung erreicht wird, und zwar im Vergleich zu einem einschichtigen Aufbau bei gleicher Wandstärke selbst dann, wenn die Schichten des mehrschichtigen Aufbaus jeweils aus demselben Material bestehen. Durch die Koextrusion läßt sich insbesondere auch das mehrschichtige, rohrförmige Ausgangsmaterial für die Verpackungshülse 2 sehr preiswert fertigen.

### Bezugszeichenliste

- 1, 1 a: Verpackung
- 2: Verpackungskörper oder -hülse
- 2', 2": Schicht
- 3, 3a: Boden
- 3', 3": Schicht
- 3a': Umfangswand
- 4: Verschlußelement

## Patentansprüche

1. Verfahren zum Herstellen einer Verpackung bestehend aus einem hülsenartigen Verpackungskörper (2) aus Kunststoff, der an einem Ende durch einen Boden (3) und am anderen Ende durch ein in den Verpackungskörper (2) eingesetztes Verschlußelement jeweils aus Kunststoff verschlossen ist, wobei der Verpackungskörper durch Abtrennen von einem rohrartigen, mehrschichtigen Ausgangsmaterial mit der jeweils benötigten Länge erzeugt und an einem Ende durch Einsetzen und Verbinden mit einem den Boden (3) bildenden Element versehen wird, wobei das rohrartige Ausgangsmaterial durch Koextrusion hergestellt ist, **dadurch gekennzeichnet,**
**dass** als Ausgangsmaterial ein solches verwendet wird, bei dem die Schichten aus ein und demselben Material bestehen, und
**dass** das den Boden (3) bildende Element als flache Scheibe durch Ausschneiden oder Ausstanzen aus einem flachen, mehrschichtigen Material erzeugt wird.

2. Verfahren nach Anspruch 1, **dadurch gekennzeichnet, dass** das Einsetzen und Verbinden des den Boden (3) bildenden Elementes vor dem Abtrennen des Verpackungskörpers (2) von dem rohrförmigen Ausgangsmaterial erfolgt.

3. Verfahren nach Anspruch 1, **dadurch gekennzeichnet, dass** das Einsetzen und Verbinden des den Boden (3) bildenden Elementes nach dem Abtrennen des Verpackungskörpers (2) von dem rohrförmigen Ausgangsmaterial erfolgt.

4. Verfahren nach einem der vorhergehenden Ansprüche, **dadurch gekennzeichnet, dass** das Verbinden des Bodens mit dem Verpackungskörper durch Kleben und/oder Schweißen erfolgt.

5. Verfahren nach einem der vorhergehenden Ansprüche, **dadurch gekennzeichnet, dass** das den Boden (3) bildende Element in dem zum Ausstanzen verwendeten Werkzeug zugleich in den Verpackungskörper (2) eingesetzt wird.

6. Verfahren nach einem der vorhergehenden Ansprüche, **dadurch gekennzeichnet, dass** die Schichten des mehrschichtigen Verpackungskörpers aus dem selben Material bestehen.

## Claims

1. Method for fabricating packaging consisting of a sleeve-type packaging body (2) of plastics which is closed at one end by a base (3) and at the other end by a closure element inserted in the packaging body (2), both of plastics, wherein the packaging body is produced by cutting it off with the required length each time from a tubular multi-layered starting material and inserting at one end an element which is connected thereto and forms the base (3) wherein the tubular starting material is made through co-extrusion, **characterised in that** as the starting material is used a material in which the layers consist of one and the same material, and that the element forming the base (3) is produced as a flat disc by cutting it out or stamping it out from a flat multi-layered material.

2. Method according to claim 1 **characterised in that** inserting and connecting the element forming the base (3) is carried out prior to separating the packaging body (2) from the tubular starting material.

3. Method according to claim 1 **characterised in that** inserting and connecting the element forming the base (3) is carried out after separating the packaging body (2) off from the tubular starting material.

4. Method according to one of the preceding claims **characterised in that** the connecting of the base to the packaging body is carried out by sticking and/or welding.

5. Method according to one of the preceding claims **characterised in that** the element forming the base (3) is inserted in the tool used for stamping it out at the same time into the packaging body (2).

6. Method according to one of the preceding claims **characterised in that** the layers of the multi-layered packaging body consist of the same material.

## Revendications

1. Procédé de fabrication d'un récipient constitué d'un corps (2) de récipient tubulaire en matière plastique qui est fermé à une extrémité par un fond (3) et à l'autre extrémité par un élément de fermeture placé dans le corps (2) de récipient, qui sont respectivement en matière plastique, dans lequel le corps de récipient est produit chaque fois à la longueur requise par séparation d'un matériau de départ brut, multicouche, et est pourvu à une extrémité par placement et connexion d'un élément formant le fond (3), le matériau de départ brut étant fabriqué par coextrusion, **caractérisé en ce qu'**on utilise comme matériau de départ un matériau dans lequel les couches sont constituées d'un seul et même matériau, et **en ce que** l'élément formant le fond (3) est produit comme un disque plat par découpe ou estampage à partir d'un matériau plat multicouche.

2. Procédé de fabrication selon la revendication 1, **caractérisé en ce que** le placement et la connexion de l'élément formant le fond (3) a lieu avant la séparation du corps (2) de récipient du matériau de départ tubulaire.

3. Procédé de fabrication selon la revendication 1, **caractérisé en ce que** le placement et la connexion de l'élément formant le fond (3) a lieu après la séparation du corps (2) de récipient du matériau de départ tubulaire.

4. Procédé de fabrication selon une des revendications précédentes, **caractérisé en ce que** la connexion du fond avec le corps de récipient est effectuée par collage et / ou soudage.

5. Procédé de fabrication selon une des revendications précédentes, **caractérisé en ce que** l'élément formant le fond (3) est placé dans l'outil utilisé pour l'estampage en même temps que dans le corps (2) de récipient.

6. Procédé de fabrication selon une des revendications précédentes, **caractérisé en ce que** les couches du corps de récipient multicouche sont constituées du même matériau.
